# FASCICULE DE BREVET EUROPEEN

(11) **EP 0 520 860 B1**
(45) Date de publication et mention de la délivrance du brevet: **28.02.1996**
(21) Numéro de dépôt: 92401675.1
(22) Date de dépôt: 16.06.1992
(51) Int. Cl.: C08J 9/14

(54) **Application de (perfluoroalkyl)-éthylènes comme agents d'expansion et/ou gaz d'isolation pour mousses de polymères**
Verwendung von (Perfluoroalkyl)Äthylen als Treibmittel und/ oder Isoliergas für polymerische Schaumstoffe
Use of (perfluoroalkyl)-ethylene as blowing agent and/or insulating gas for polymeric foams

(30) Priorité: 27.06.1991 FR 9107979
(43) Date de publication de la demande: 30.12.1992
(73) Titulaire: ELF ATOCHEM S.A., F-92800 Puteaux (FR)
(72) Inventeur: Meynard, Corinne, F-92110 Clichy (FR)
(74) Mandataire: Leboulenger, Jean

(56) Documents cités:
- EP-A- 523 398
- US-A- 3 723 318

## Description

La présente invention concerne le domaine des hydrocarbures fluorés et celui des mousses de polymères, et a plus particulièrement pour objet l'emploi de (perfluoroalkyl)-éthylènes comme agents d'expansion et/ou gaz d'isolation dans la fabrication de mousses de polymères.

Les chlorofluorocarbures (CFC) tels que le fluorotrichlorométhane (CFC 11), le dichlorodifluorométhane (CFC 12) et le 1,1,2-trichloro-1,2,2-trifluoroéthane (CFC 113), sont actuellement les agents d'expansion et gaz d'isolation les plus utilisés pour fabriquer tous types de mousses de polymères destinés à l'isolation, en particulier des mousses à cellules fermées, notamment des mousses de polyuréthane ou de polyisocyanurate, des mousses de polystyrène et de polyéthylène extrudées, des mousses phénoliques, des mousses de poly(chlorure de vinyle),...

Les CFC 11 et 12 sont également utilisés pour la fabrication de mousses de polyoléfines telles que polyéthylène et polypropylène, de polystyrène ou de poly(chlorure de vinyle), plus spécialement destinées à l'emballage.

Cependant, les CFC 11, 12 et 113 font partie des chlorofluorocarbures complètement halogénés qui, en raison de leur grande stabilité chimique, sont suspectés d'attaquer ou de dégrader l'ozone stratosphérique et dont il est prévu d'interdire l'utilisation à la fin de ce siècle.

Comme solution à ce problème, il est actuellement envisagé de remplacer les CFC par des hydrocarbures chlorofluorés contenant au moins un atome d'hydrogène tels que le chlorodifluororométhane (HCFC 22), le 1,1-dichloro-2,2,2-trifluoroéthane (HCFC 123), le 1-chloro-1,2,2,2-tétrafluoroéthane (HCFC 124), le 1,1-dichloro-1-fluoroéthane (HCFC 141b) et le 1-chloro-1,1-difluoroéthane (HCFC 142b). Bien que les HCFC présentent des potentiels d'appauvrissement de l'ozone (O.D.P. = ozone - depletion potential) nettement inférieurs à ceux des CFC, leur O.D.P. n'est cependant pas nul et leur substitution aux CFC ne peut donc constituer qu'une solution transitoire.

On recherche donc encore des composés totalement dépourvus d'effet destructeur vis-à-vis de l'ozone stratosphérique (O.D.P. = 0) et présentant des propriétés similaires à celles des CFC 11, 12 et 113 pour remplacer ces derniers comme agents d'expansion et gaz d'isolation dans la fabrication des mousses de polymères.

Il a maintenant été trouvé que ce problème peut être résolu en utilisant les (perfluoroalkyl)-éthylènes de formule :

R_{F}-CH=CH₂ (I)

dans laquelle R_{F} représente un radical perfluoroalkyle, linéaire ou ramifié, contenant de 1 à 6 atomes de carbone. Ces composés ont un O.D.P. nul ; les propriétés des composés préférés sont illustrées par le tableau suivant.

| **PROPRIETES** | **R**_{**F**} | | |
|---|---|---|---|
| | (CF₃)₂CF | C₄F₉ | C₆F₁₃ |
| Point d'ébullition (°C) | 31 | 59 | 105 |
| Conductivité thermique vapeur à 10°C (mW/m.K) | 9,2 | 8,1 | 6,7 |
| Tension de vapeur à 10°C (mbar) | 445 | 137 | 143 |

L'invention a donc pour objet l'utilisation d'au moins un (perfluoroalkyl)-éthylène de formule (I) comme agent gonflant et gaz d'isolation dans la fabrication des mousses de polymères. L'invention concerne aussi les mousses expansées au moyen d'un composé de formule (I).

Les composés de formule (I) peuvent être obtenus industriellement par des procédés connus en soi, par exemple par un procédé en deux étapes consistant successivement en :
- l'addition d'éthylène sur l'iodure de perfluoroalkyle R_{F}I correspondant en présence d'un catalyseur à base de cuivre et d'éthanolamine, et
- la déhydroiodation du iodure R_{F}-CH₂CH₂I ainsi obtenu, en présence de potasse alcoolique.

L'agent d'expansion le plus utilisé actuellement pour la fabrication des mousses de polystyrène et de poly(chlorure de vinyle) est le CFC 12. Pour remplacer ce composé dans cette application, on utilisera de préférence un composé de formule (I) dont le radical perfluoroalkyle R_{F} contient de 1 à 3 atomes de carbone, par exemple le (perfluoroisopropyl)-éthylène.

Les principaux agents d'expansion utilisés actuellement pour la fabrication des mousses de polyoléfines (polyéthylène, polypropylène) sont les CFC 11 et 12 employés seuls ou en mélange avec le 1,2-dichloro-1,1,2,2-tétrafluoroéthane (CFC 114) ou avec des hydrocarbures. Pour remplacer le CFC 11 dans cette application on utilisera de préférence un composé de formule (I) dont le radical R_{F} contient de 3 à 6 atomes de carbone, par exemple le (n.perfluorobutyl)-éthylène ; pour remplacer le CFC 12 dans cette application, on utilisera de préférence un (perfluoroalkyl)-éthylène dont le radical R_{F} contient de 1 à 3 atomes de carbone, par exemple le (perfluoroisopropyl)-éthylène. Dans cette application, les composés (I) selon l'invention peuvent être utilisés seuls, en mélange entre eux ou en mélange avec des alcanes (par exemple le butane) ; dans un tel mélange, la proportion pondérale d'agent d'expansion secondaire peut aller jusqu'à 90 %.

Les principaux agents d'expansion utilisés actuellement pour la fabrication des mousses phénoliques sont les CFC 11 et 113 employés seuls ou en mélange. Pour remplacer les CFC 11 et 113 dans cette application, on utilisera de préférence un composé de formule (I) dont le radical R_{F} contient de 3 à 6 atomes de carbone, par exemple le (n.perfluorohexyl)-éthylène. Dans cette application, les (perfluoroalkyl)-éthylènes selon l'invention peuvent être utilisés seuls, en mélange entre eux ou en mélange avec des alcanes halogénés ou non, par exemple le pentane, le butane, le perfluoropentane, le 1,1-dichloro-1-fluoroéthane ; dans un tel mélange, la proportion d'alcane halogéné ou non peut aller jusqu'à 90 % en poids.

Les techniques de fabrication des mousses de polystyrène ou de PVC, des mousses de polyoléfines et des mousses phénoliques sont bien connues et n'ont pas besoin d'être décrites ici puisqu'il suffit de remplacer l'agent d'expansion habituel (CFC 11, 12 ou 113) par un composé de formule (I) ou un mélange de tels composés. La quantité molaire de composé(s) de formule (I) à mettre en oeuvre est sensiblement la même que celle de l'agent d'expansion qu'il(s) remplace(nt).

Le principal agent d'expansion utilisé actuellement pour la fabrication des mousses de polyuréthane ou de polyisocyanurate est le CFC 11. Pour remplacer ce composé dans cette application, on utilisera de préférence un composé de formule (I) dont le radical perfluoroalkyle R_{F} contient de 3 à 6 atomes de carbone, par exemple le (perfluoroisopropyl)-éthylène, le (n-perfluorobutyl)-éthylène ou le (n-perfluorohexyl)-éthylène. Dans cette application, le composé (I) selon l'invention peut être utilisé en mélange avec de l'eau, un alcane fluoré ou non (par exemple le pentane, le cyclopentane, le cyclohexane, le perfluoropentane, le perfluorohexane, le 1H-perfluorohexane, le 1H-perfluorobutane, le 1,1-dichloro-1-fluoroéthane) ou un éther halogéné, de préférence fluoré (par exemple le méthyl 2,2,2-trifluoroéthyl éther ou le difluorométhyl 2,2,2-trifluoroéthyl éther) ; la proportion pondérale d'eau dans un tel mélange peut aller jusqu'à 5 % et celle d'alcane ou d'éther jusqu'à 90 %.

Les (perfluoroalkyl)-éthylènes (I) selon l'invention étant peu solubles dans les polyols généralement utilisés pour la fabrication des mousses de polyuréthane et de polyisocyanurate, il est nécessaire de réaliser un prémélange du ou des (perfluoroalkyl)-éthylène(s) avec le ou les polyol(s) et les additifs usuels nécessaires à la formulation (catalyseurs, stabilisants et/ou tensio-actifs) de façon à obtenir après agitation violente une émulsion stable pendant le temps nécessaire à sa mise en contact avec le composant isocyanate conduisant à la production de la mousse. Avec une quantité pondérale de (perfluoroalkyl)-éthylène 2 à 5 fois moindre que celle de CFC 11 habituellement employée, il est surprenant d'obtenir des mousses d'isolation à cellularité très fine, ayant une bonne moulabilité, des propriétés équivalentes à celles obtenues avec le CFC 11, et une faible conductivité thermique.

Les exemples suivants illustrent l'invention, sans la limiter. Sauf indication contraire, les parties indiquées s'entendent en poids.

### EXEMPLE 1

On prépare une émulsion d'agent d'expansion en ajoutant sous agitation énergique 10 parties de (n.perfluorobutyl)-éthylène à un mélange de 93 parties de tripropylèneglycol, 2 parties de catalyseur amine (Polycat 8 d'Abbott Laboratories), 1,5 partie de silicone (Tegostab B 8409 de Goldschmidt AG.) et 3,5 parties d'eau.

On fait réagir 100 parties de l'émulsion ainsi obtenue avec 202 parties d'un polyisocyanate (Lupranat M2OS de BASF AG.) constitué d'un mélange de diphénylméthane-diisocyanate et de polyphényl-polyméthylène-polyisocyanates et ayant une teneur pondérale en NCO de 31 %.

On obtient ainsi une mousse rigide de densité égale à 34 g/l. La proportion de cellules fermées est de 89 % et la conductivité thermique de la mousse est égale à 21 mW/m.K.

### EXEMPLE 2

On agite énergiquement 9 parties de (perfluoro-isopropyl)-éthylène avec un mélange constitué par :
- 93 parties de polyol (nombre d'hydroxyle = 410) obtenu par addition d'oxyde de propylène-1,2 sur du sucrose
- 2 parties de catalyseur amine (Polycat 8)
- 1 partie de silicone (Tegostab B8409)
- 3,5 parties d'eau

En faisant réagir 100 parties de l'émulsion ainsi obtenue avec 157 parties du même polyisocyanate (Lupranat M20S) qu'à l'exemple 1, on obtient une mousse rigide de densité égale à 31 g/l et de conductivité thermique égale à 20 mW/m.K.

### EXEMPLE 3

On prépare une émulsion en agitant 7 parties de (n.perfluorohexyl)-éthylène avec un mélange composé de 91,9 parties de tripropylèneglycol, 2 parties de N,N,N′,N′-tétraméthyl hexaméthylènediamine, 2,5 parties d'un stabilisant de mousse (OS710 de BAYER AG) et 3,6 parties d'eau.

Par réaction de 100 parties de cette émulsion avec 181 parties du même polyisocyanate qu'à l'exemple 1, on obtient une mousse rigide à cellules fines ayant une densité de 34 g/l et une conductivité thermique de 19,5 mW/m.K.

### EXEMPLE 4

On prépare une émulsion en agitant 3,8 parties de (n.perfluorobutyl)-éthylène et 1,1 partie de cyclopentane avec un mélange composé de 91,9 parties du même polyol qu'à l'exemple 2, 2 parties de catalyseur Polycat 8, 2,5 parties de silicone (Tegostab B8406 de Goldschmidt AG) et 3,6 parties d'eau.

Par réaction de 100 parties de cette émulsion avec 150 parties du même polyisocyanate qu'à l'exemple 1, on obtient une mousse rigide à cellules fines de densité égale à 34 g/l. La proportion de cellules fermées est de 94 % et la conductivité thermique de la mousse est de 20,5 mW/m.K.

### EXEMPLE 5

On prépare une émulsion d'agent d'expansion en agitant 10,5 parties de (n.perfluorobutyl)-éthylène et 5,7 parties de difluorométhyl 2,2,2-trifluoroéthyl éther dans un mélange composé de 92,4 parties de dipropylèneglycol, 3,6 parties d'eau, 1,5 partie de catalyseur Polycat 8 et 2,5 parties de stabilisant OS 710.

En faisant réagir 100 parties de l'émulsion ainsi obtenue avec 227 parties du même polyisocyanate qu'à l'exemple 1, on obtient une mousse à cellules fines ayant une densité de 33,6 g/l, une proportion de cellules fermées de 89 % et une conductivité thermique de 19,9 mW/m.K.

### EXEMPLE 6

On prépare une émulsion d'agent d'expansion en agitant 8 parties de (n.perfluorobutyl)-éthylène et 11 parties de perfluorohexane dans un mélange constitué de :
- 46,1 parties d'un polyol (nombre d'hydroxyle = 475) obtenu par addition d'oxyde de propylène-1,2 au sorbitol
- 46 parties de tripropylèneglycol
- 3,6 parties d'eau
- 1,8 partie de Polycat 8 et
- 2,5 parties de stabilisant Tegostab B8406.

En faisant réagir 100 parties de cette émulsion avec 158 parties du même polyisocyanate qu'à l'exemple 1, on obtient une mousse à cellules fines ayant une densité de 26,1 g/l et une conductivité thermique de 19,5 mW/mK.

### EXEMPLE 7

On prépare une émulsion en agitant 8 parties de (n.perfluorobutyl)-éthylène et 3,8 parties de 1,1-dichloro-1-fluoroéthane avec un mélange composé de 92 parties du même polyol qu'à l'exemple 2, 1,9 parties de N,N,N′,N′-tétraméthyl hexaméthylènediamine, 2,5 parties de stabilisant OS 710 et 3,6 parties d'eau.

Par réaction de 100 parties de cette émulsion avec 157 parties du même polyisocyanate qu'à l'exemple 1, on obtient une mousse à cellules fines ayant une densité de 27,9 g/l et une conductivité thermique de 20,7 mW/m.K. La proportion de cellules fermées est de 93 %.

## Revendications

1. Application d'au moins un (perfluoroalkyl)-éthylène de formule :
R_{F}-CH=CH₂ (I)
dans laquelle R_{F} représente un radical perfluoroalkyle, linéaire ou ramifié, contenant de 1 à 6 atomes de carbone, comme agent d'expansion et/ou gaz d'isolation dans la fabrication des mousses de polymères.

2. Application selon la revendication 1 dans laquelle, pour remplacer le fluorotrichlorométhane (CFC 11) ou le 1,1,2-trichloro-1,2,2-trifluoroéthane (CFC 113), on utilise un composé de formule (I) dont le radical R_{F} contient de 3 à 6 atomes de carbone.

3. Application selon la revendication 1 dans laquelle, pour remplacer le dichlorodifluorométhane (CFC 12), on utilise un composé de formule (I) dont le radical R_{F} contient de 1 à 3 atomes de carbone.

4. Application selon l'une des revendications 1 à 3, dans laquelle le composé de formule (I) est le (perfluoroisopropyl)-éthylène.

5. Application selon la revendication 1 ou 2, dans laquelle le composé de formule (I) est le (n.perfluorobutyl)-éthylène.

6. Application selon la revendication 1 ou 2, dans laquelle le composé de formule (I) est le (n.perfluorohexyl)-éthylène.

7. Application selon l'une des revendications 1 à 6, dans laquelle on utilise un mélange d'au moins un composé de formule (I) avec de l'eau, un alcane fluoré ou non ou un éther halogéné, pour la fabrication des mousses de polyuréthane ou de polyisocyanurate.

8. Mousses de polymères expansées au moyen d'un composé de formule (I) tel que défini dans la revendication 1.

## Patentansprüche

1. Verwendung mindestens eines (Perfluoralkyl)-ethylens der Formel
R_{F}-CH=CH₂ (I)
in der R_{F} einen linearen oder verzweigten, 1 bis 6 Kohlenstoffatome enthaltenden Perfluoralkylrest darstellt, als Treibmittel und/oder Isolier-gas bei der Herstellung polymerischer Schaumstoffe.

2. Verwendung nach Anspruch 1, bei der man eine Verbindung der Formel (I) verwendet, deren Rest R_{F} 3 bis 6 Kohlenstoffe enthält, um Trichlorfluormethan (FCKW 11) oder 1,1,2-Trichlor-1,2,2-trifluorethan (FCKW 113) zu ersetzen.

3. Verwendung nach Anspruch 1, bei der man eine Verbindung der Formel (I) verwendet, deren Rest R_{F} 1 bis 3 Kohlenstoffatome enthält, um Dichlordifluormethan (FCKW 12) zu ersetzen.

4. Verwendung nach einem der Ansprüche 1 bis 3, bei der die Verbindung der Formel (I) (Perfluorisopropyl)-ethylen ist.

5. Verwendung nach Anspruch 1 oder 2, bei der die Verbindung der Formel (I) (n-Perfluorbutyl)-ethylen ist.

6. Verwendung nach Anspruch 1 oder 2, bei der die Verbindung der Formel (I) (n-Perfluorhexyl)-ethylen ist.

7. Verwendung nach einem der Ansprüche 1 bis 6, bei der man zur Herstellung von Polyurethan- oder Polyisocyanuratschaumstoffen eine Mischung mindestens einer Verbindung der Formel (I) mit Wasser, einem gegebenenfalls fluorierten Alkan oder einem halogenierten Ether verwendet.

8. Polymerische Schaumstoffe, aufgeschäumt mittels einer Verbindung der Formel (I) nach Anspruch 1.

## Claims

1. Application of at least one (perfluoroalkyl)-ethylene of formula:
R_{F}-CH=CH₂ (I)
in which R_{F} denotes a linear or branched perfluoroalkyl radical containing from 1 to 6 carbon atoms, as blowing agent and/or insulating gas in the manufacture of polymer foams.

2. Application according to Claim 1, in which, to replace fluorotrichloromethane (CFC 11) or 1,1,2-trichloro-1,2,2-trifluoroethane (CFC 113), use is made of a compound of formula (I) in which the radical R_{F} contains from 3 to 6 carbon atoms.

3. Application according to Claim 1, in which, to replace dichlorodifluoromethane (CFC 12), use is made of a compound of formula (I) in which the radical R_{F} contains from 1 to 3 carbon atoms.

4. Application according to one of Claims 1 to 3, in which the compound of formula (I) is (perfluoroisopropyl)ethylene.

5. Application according to Claim 1 or 2, in which the compound of formula (I) is (n-perfluorobutyl)-ethylene.

6. Application according to Claim 1 or 2, in which the compound of formula (I) is (n-perfluorohexyl)ethylene.

7. Application according to one of Claims 1 to 6, in which a mixture of at least one compound of formula (I) with water, an alkane which may be fluorinated or a halogenated ether is employed for the manufacture of polyurethane or polyisocyanurate foams.

8. Polymer foams expanded by means of a compound of formula (I) as defined in Claim 1.
